# EUROPÄISCHE PATENTANMELDUNG

(11) **EP 2 433 773 A1**
(43) Veröffentlichungstag der Anmeldung: **28.03.2012**
(21) Anmeldenummer: 10179102.8
(22) Anmeldetag: 24.09.2010
(51) Int. Cl.: B29C 45/14, H01M 2/06

(54) **Verfahren zum Herstellen eines Formbauteils umfassend eine mit einem Kunststoff hinterspritzte, elektrisch leitfähig beschichtete Folie und Formbauteil**

(71) Anmelder: Bayer MaterialScience AG, 51368 Leverkusen (DE)
(72) Erfinder: Wagner, Thomas, 51368 Leverkusen (DE); Dierksen, Karsten, Dr., 51368 Leverkusen (DE); Künzel, Roland, 51368 Leverkusen (DE); Münz, Jörg, 51368 Leverkusen (DE); Degiorgio, Nicolas, 51368 Leverkusen (DE)

(57) **Zusammenfassung**

Die vorliegende Erfindung betrifft ein Verfahren zum Herstellen eines Formbauteils umfassend eine mit einem Kunststoff hinterspritzte, elektrisch leitfähig beschichtete Folie sowie ein gemäß diesem Verfahren hergestelltes Formbauteil.

## Beschreibung

Die vorliegende Erfindung betrifft ein Verfahren zum Herstellen eines Formbauteils umfassend eine mit einem Kunststoff hinterspritzte, elektrisch leitfähig beschichtete Folie sowie ein gemäß diesem Verfahren hergestelltes Formbauteil.

Aus dem Stand der Technik ist das Film-Insert-Molding (FIM) als ein leistungsfähiges Verfahren bekannt, um funktionale Folien, insbesondere dekorativ gestaltete Folien mit besonderen Oberflächeneigenschaften, wie Abrieb- oder Kratzfestigkeit, mit Kunststoff zu hinterspritzen und somit Formbauteile mit speziellen dekorativen Oberflächen zu schaffen. Wird das Folienhalbzeug im Vorfeld des Hinterspritzens umgeformt und geeignet beschnitten, sind auch dreidimensionale Formen mit großer Geometrievielfalt und Oberflächenqualität herstellbar.

Vielfach besteht die Anforderung, Folien auch elektrisch leitfähig zu gestalten, indem beispielsweise Leiterbahnen oder eine Antennenstruktur auf der Folie realisiert werden. Diese sind elektrisch zu kontaktieren, um eine Verbindung zu peripherer Elektronik oder zu einer Spannungsversorgung herzustellen. Im Falle einer Antennenstruktur ist diese mit einem Sende-/Empfangsmodul eines portablen Geräts, insbesondere eines Mobiltelefons, sicher und dauerhaft zu verbinden. Im Allgemeinen wird dies z.B. durch Randkartenstecker, Kontaktfahnen, leitfähige Kleber, oder Krimpkontakte gelöst, an die ein weiterführendes Kabel oder ein Flexleiter angebracht ist. Besteht durch die Produktgeometrie keine Möglichkeit der Folienrandkontaktierung, so muss die Kontaktierung auf der Folienrückseite in der Fläche erfolgen.

Im Falle kunststoffhinterspritzter Folien erfolgt die Kontaktierung in der Fläche in der Weise, dass der Kontaktbereich während des Hinterspritzens beispielsweise durch einen Metallstempel freigestellt wird, somit also nicht mit Kunststoff überdeckt wird. Bei der Weiterverarbeitung wird der Kontaktbereich der Leiterbahnen sodann mit einen Federkontakt kontaktiert, oder ein Flexleiter elektrisch leitend aufgeklebt. Die Federkontaktierung einer Folie, speziell einer Elektroluminiszenz-Folie, ist aus der US 6,850,004 bekannt.

An der Kontaktstelle entsteht durch die Freistellung im Allgemeinen eine Oberflächendeformation an dem Spritzgießteil mit deutlich sichtbarer Randabgrenzung zu dem umspritzten Kunststoffmaterial. Durch die spätere Kontaktierung z.B. mit einem Federkontakt wird die in der Regel dünne Folie (75µm bis 500µm) zusätzlich deformiert. Als nachteilig erweist sich die Abzeichnung auf der Außenseite in Form einer ästhetisch unvorteilhaften Eindellung oder Aufwölbung des Kontaktbereiches sowie die aufwändigen Fertigungsschritte für die Kontaktierung der offenen Kontaktstellen. Eine Oberflächenveränderung der beschriebenen Art infolge des Hinterspritzens macht sich insbesondere bei dekorativen Hochglanzoberflächen unter ästhetischen Gesichtspunkten negativ bemerkbar.

Hiervon ausgehend liegt der Erfindung die Aufgabe zugrunde, ein Verfahren zum Herstellen eines Formbauteils umfassend eine mit einem Kunststoff hinterspritzte, elektrisch leitfähige Folie anzugeben, welches mit geringem fertigungstechnischem Aufwand durchführbar ist und die Herstellung von Formbauteilen hoher Qualität, insbesondere hoher Oberflächenqualität, ermöglicht.

Die Aufgabe wird erfindungsgemäß mit einem Verfahren zum Herstellen eines Formbauteils umfassend eine mit einem Kunststoff hinterspritzte, elektrisch leitfähig beschichteten Folie gelöst, bei dem eine elektrisch leitfähig beschichtete Folie in einem Spritzgießwerkzeug positioniert wird, bei dem anschließend ein Abdeckelement auf dem zu kontaktierenden Bereich der Folie positioniert wird und bei dem daran anschließend zur Hinterspritzung der Folie eine Kunststoffschmelze in das Spritzgießwerkzeug eingespritzt wird, wobei das Abdeckelement umspritzt wird, wobei das Abdeckelement aus einem Polymerwerkstoff gebildet ist.

Der besondere Vorteil des erfindungsgemäßen Verfahrens liegt darin, dass infolge der Wahl eines Polymerwerkstoffs für das Abdeckelement dieses an die Materialeigenschaften der Kunststoffschmelze angepasst ist, so dass insbesondere sein Temperaturverhalten und Elastizitätsverhalten im Wesentlichen dem der Schmelze entspricht. Dies hat zur Folge, dass die Schmelze in unmittelbarer Nachbarschaft zum Abdeckelement ein ähnliches Schwindungsverhalten beim Abkühlen zeigt wie in weiterer Entfernung und dass die Wärmeleitung und Druckverhältnisse vom Abdeckelement in die leitfähig beschichtete Folie im Wesentlichen der Wärmeleitung und den Druckverhältnissen von der Schmelze in die Folie entsprechen. Dies wiederum bewirkt in vorteilhafter Weise, dass es nur zu sehr geringen bis gar keinen Verformungen der Folie im Bereich des Abdeckelements, insbesondere zu keinen ästhetisch unvorteilhaften Aufwölbungen kommt.

Um die Neigung der Folie zu Aufwölbungen im Bereich des Abdeckelements noch weiter zu minimieren, kann nach einer ersten vorteilhaften Ausgestaltung der Erfindung vorgesehen sein, dass der polymere Werkstoff des Abdeckelements hinsichtlich seiner Wärmeleitfähigkeit und/oder seiner Wärmekapazität und/oder seines Kompressionsmoduls und/oder seines Elastizitätsmoduls an die in das Spritzgießwerkzeug eingespritzte Kunststoffschmelze angepasst ist.

Unter dem Begriff Kunststoffschmelze im Sinne der vorliegenden Erfindung werden sämtliche für das Spritzgießen geeigneten plastifizierbaren Materialien verstanden. Ferner werden vorliegend auch solche Materialien unter den Begriff Kunststoffschmelze gefasst, die als unterschiedliche Komponenten in das Spritzgießwerkzeug eingespritzt werden und dort miteinander unter Bildung eines formstabilen Kunststoffs reagieren. Als Beispiel sei hier das RIM-Verfahren (Reaction Injection Moulding) genannt, bei dem ein Zweikomponentengemisch im Spritzgießwerkzeug aushärtet (z.B. z.B. Polyol und Isocyanat zu Polyurethan).

Das Abdeckelement selbst kann unterschiedliche Geometrien aufweisen. Insbesondere kann es zylinder-, quader- oder kegelförmig ausgebildet sein. Ebenso sind auch Mischformen möglich, beispielsweise eine Zylinderform mit kegelförmig ausgebildetem Fuß. Letzteres verbessert die Anlage des Abdeckelementes an die zu hinterspritzende Folie.

Von besonderer Bedeutung ist, dass der Temperaturverlauf im Abdeckelement soweit wie möglich an den Temperaturverlauf in der in die Kavität des Spritzgießwerkzeugs eingespritzten Schmelze angepasst ist. Dies kann nach einer weiteren Ausgestaltung der Erfindung in vorteilhafter Weise dadurch erreicht werden, dass das Abdeckelement vorgeheizt wird. Insbesondere wird es auf zu Beginn des Spritzgießprozesses in etwa auf Schmelzentemperatur vorgeheizt. Bevorzugt wird das Abdeckelement auf eine Temperatur vorgeheizt, die deutlich höher als die Werkzeugtemperatur, jedoch niedriger als die Glasübergangstemperatur des Folienwerkstoffs und des Werkstoffs der Kunststoffschmelze ist.

Ein weiteres Problem bei der Freistellung eines Kontaktbereiches auf der Rückseite einer leitfähigen Folie besteht in der Schwindung der Kunststoffschmelze während des Erstarrungsprozesses. Diese führt zu einer deutlichen Abzeichnung der Kontaktstelle auf der sichtbaren Seite der leitfähigen Folie. Um eine hieraus resultierende Deformation der Folienoberfläche weiter zu minimieren, ist nach einer weiteren vorteilhaften Ausgestaltung der Erfindung vorgesehen, dass das Abdeckelement aus einem elastischen Polymeren Werkstoff gebildet ist. Infolge seiner Elastizität kann das Abdeckelement die Schwindung der Kunststoffschmelze in der Erstarrungsphase kompensieren. Die gelingt insbesondere dann, wenn das auf dem zu kontaktierenden Bereich der Folie positionierte Abdeckelement beim Einspritzen der Kunststoffschmelze in die Kavität des Spritzgießwerkzeugs beispielsweise durch einen Druckstempel druckbeaufschlagt wird. Kann darüber hinaus der auf das Abdeckelement ausgeübte Druck geregelt werden, so ist es beispielsweise möglich, das Abdeckelement während der Erstarrungsphase der Kunststoffschmelze geregelt druckzuentlasten, um zu verhindern, dass die Schmelze in der Phase des Abfalls des Prozessdrucks von beispielsweise bis zu 1200 bar (im Falle einer Schmelze aus PC oder PC/ABS) auf Normaldruck von dem Abdeckelement von der Kontaktstelle verdrängt wird, was zu einer sichtbaren Deformation der Folie führen würde. Dementsprechend ist nach einer weiteren vorteilhaften Ausgestaltung der Erfindung vorgesehen, dass die Druckbeaufschlagung des Abdeckelementes in der Erstarrungsphase der Kunststoffschmelze bevorzugt parallel zum Druckabbau in der erstarrenden Schmelze reduziert wird.

Nach einer besonders vorteilhaften Ausgestaltung der Erfindung ist das Abdeckelement leit fähig ausgestaltet und verbleibt in der Kunststoffschmelze. Das Abdeckelement übernimmt somit in dem fertig produzierten Formbauteil die Funktion eines Kontaktelementes, über welches die elektrisch leitfähige Folie in der Fläche kontaktiert wird.

Um einerseits in der erfindungsgemäßen Weise eine Deformation der hinterspritzten Folie während der Erstarrung der Kunststoffschmelze zu vermeiden und andererseits eine sichere Kontaktierung über einen langen Zeitraum zu gewährleisten, ist das in der erstandenen Kunststoffschmelze verbleibende Abdeckelement bevorzugt aus einem polymeren Werkstoff der Gruppe, Elastomere, insbesondere vernetzte Elastomere, speziell Polyurethan und Silikon, oder teilvernetzte Elastomere, und Thermoplaste, speziell Acrylnitril-Butadien-Styrol-Copolymerisat, Polycarbonat und Polycarbonat/Acrylnitril-Butadien-Styrol-Copolymerisat, gebildet. Die Leitfähigkeit wird dabei über leitfähige Füllstoffe in der Polymermatrix und/oder durch eine leitfähige äußere Beschichtung des Abdeckelements und/oder durch in dem Abdeckelement vorhandenes makroskopisches leitfähiges Material, beispielsweise Drähte o.dgl., bewerkstelligt. Um die Leitfähigkeit des Abdeckelements weiter zu verbessern, kann das Abdeckelement aus einem polymeren Werkstoff, in den ein Metallschaum eingebettet ist, gebildet sein.

Oftmals ist es erforderlich, eine Mehrfachkontaktierung der leitfähigen Folie auf kleinstem Raum sicherzustellen. In diesem Falle ist es sinnvoll, ein in der Kunststoffschmelze verbleibendes Abdeckelement zu verwenden, welches eine Mehrzahl gegeneinander isolierter leitfähiger Lamellen aufweist, die auf entsprechenden Kontaktzonen der leitfähigen Folie aufsetzen.

Praktisch kann die Verwendung eines in der Kunststoffschmelze verbleibenden leitfähigen Abdeckelements derart realisiert sein, dass das Abdeckelement am freien Ende eines Haltestempels angeordnet ist und von diesem in definierter Weise auf der Rückseite der in der Kavität des Spritzgießwerkzeugs eingelegten leitfähigen Folie gehalten wird. Bevorzugt wird das Abdeckelement durch den Haltestempel mit definiertem Druck auf die Folie gepresst.

Um einen hohen Automatisierungsgrad im Spritzgießprozess zu erreichen, kann zudem vorgesehen seien, dass das Abdeckelement durch den Schaft des Haltestempels zugeführt wird.

Im Zuge des Einspritzens der Kunststoffschmelze in die Kavität des Spritzgießwerkzeugs wird das Abdeckelement von der unter sehr hohem Druck stehenden Schmelze umströmt. Hierbei ist es vorteilhaft, das Abdeckelement durch den Haltestempel derart druckzubeaufschlagen, so dass nicht die Gefahr besteht, dass das Abdeckelement durch die es zunächst einseitig umströmende Schmelze nicht aus der vorgesehenen Kontaktposition auf der Folienrückseite gepresst wird. Der Haltstempel kann hierzu federbelastet sein, wobei die Feder beispielsweise beim Schließen des Spritzgießwerkzeugs mechanisch vorgespannt wird. Alternativ hierzu oder dies unterstützend kann der Haltestempel einen Stempelring aufweist, wobei der Stempelring auf der vom Schmelzfluss abgewandten Seite verlängert ausgebildet ist oder wobei der Stempelring ein geschlitztes, das Abdeckelement aufnehmendes Ende aufweist und in das Spritzgießwerkzeug hineinragt.. Hierdurch kann das Abdeckelement gegen die strömende Schmelze wirkungsvoll gestützt werden.

Nach einer weiteren besonders vorteilhaften Ausgestaltung der Erfindung kann das Abdeckelement als das freie Ende eines in die Kavität des Spritzgießwerkzeugs hineinragenden Haltestempels ausgebildet sein, wobei zumindest das Abdeckelement aus einem Polymerwerkstoff gebildet ist und wobei das Abdeckelement mit dem Haltstempel nach Abschluss des Einspritzvorgangs, insbesondere nach erfolgter Erstarrung der eingespritzten Kunststoffschmelze, wieder aus der Kavität des Spritzgießwerkzeugs entfernt wird. Mit dieser zur Bereitstellung eines separaten, in dem Formbauteil verbleibenden Abdeckelements alternativen Verfahrensausgestaltung ist es möglich, auch weiterhin konventionelle Kontaktierungen der leitfähigen Folie beispielsweise in Form von Federkontakten einzusetzen, gleichzeitig jedoch in der erfindungsgemäßen Weise eine Deformation der leitfähigen Folie weitestgehend zu vermeiden.

Ein weiterer Aspekt der vorliegenden Erfindung betrifft ein Formbauteil umfassend eine mit einem Kunststoff hinterspritzte, elektrisch leitfähige Folie, hergestellt nach einem Verfahren gemäß den Ansprüchen 1 bis 14.

Im Folgenden wird die Erfindung anhand einer ein Ausführungsbeispiel darstellenden Zeichnung näher erläutert. Es zeigen:
- Fig. 1a-g: die einzelnen Prozessschritte bei der Herstellung eines Formbauteils,
- Fig. 2: eine alternative Ausgestaltung des fertig hergestellten Formbauteils aus Fig. 1g,
- Fig. 3: eine weitere alternative Ausgestaltung des fertig hergestellten Formbauteils aus Fig. 1g,
- Fig. 4: das Spritzgießwerkzeug der Fig. 1 mit modifiziertem Stempelring,
- Fig. 5a-d: verschiedene Ausgestaltungen eines leitfähigen Abdeckelements für das Formbauteil,
- Fig. 6a-i: weitere Ausgestaltungen eines Abdeckelements und
- Fig. 7a-d: verschiedene Ausgestaltungen des Stempelringes des Haltestempels des Spritzgießwerkzeugs der Fig. 1

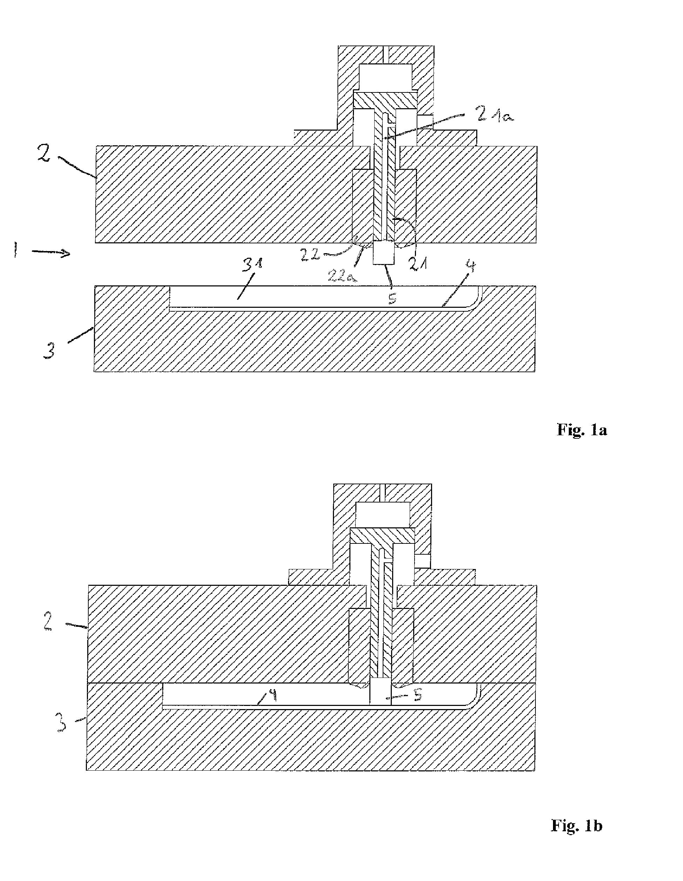

In Fig. 1a bis g sind die verschiedenen Prozessschritte zur Herstellung eines Formbauteils 6 dargestellt, wobei das Formbauteil 6 eine kunststoffhinterspritzte leitfähig beschichtete Folie 4 aufweist. Im Einzelnen kann es sich bei dem Formbauteil um die Schale eines Mobiltelefons handeln. Um diesem ein edles Design zu verleihen, weist die Folie 4 eine Hochglanzoberfläche auf. Dies bringt jedoch das Problem mit sich, dass sämtliche während des Herstellungsprozesses des Formbauteils 6 auftretenden Unebenheiten in der Folienoberfläche aufgrund einer übermäßigen lokalen thermischen oder mechanischen Belastung der Folie 4 dauerhaft deutlich sichtbar sind und somit das äußere Erscheinungsbild des Formbauteils 6 beeinträchtigen.

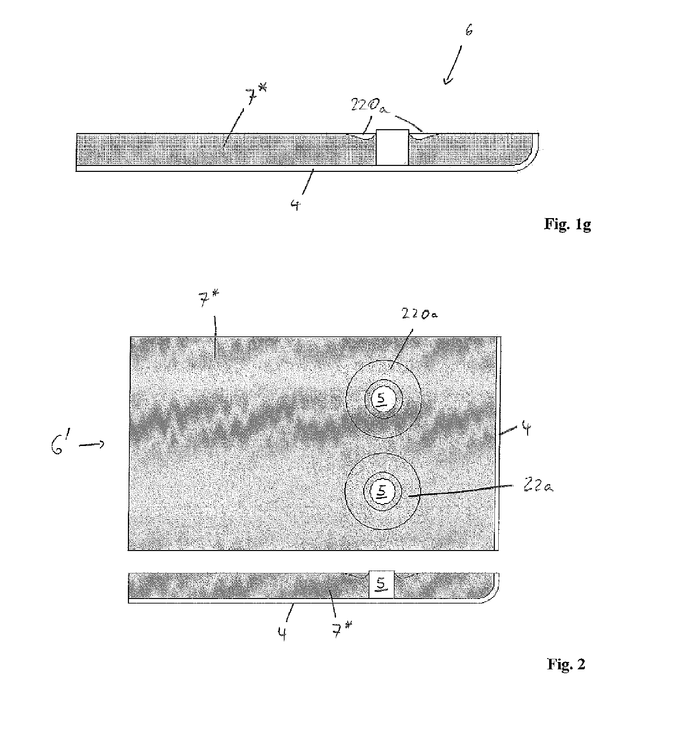

Zur Herstellung des Formbauteils 6 wird gemäß Fig. 1a ein eine obere Formhälfte 2 und eine untere Formhälfte 3 aufweisendes Spritzgießwerkzeug 1 bereitgestellt. Die untere Formhälfte 3 weist vorliegend eine Kavität 31 als äußere Geometriebegrenzung für das herzustellende Formbauteil 6 (vgl. Fig. 1g) auf. In die Kavität der Formunterhälfte 3 ist eine Folie 4 eingelegt, die derart vorgeformt ist, dass sie formschlüssig an den Boden der Kavität 31 anliegt. Die Folie 4 ist leitfähig ausgebildet, beispielsweise in der Weise, dass eine Leiterbahn- oder Antennenstrukter in ihr vorgesehen ist. Um diese zu kontaktieren, weist die Folie spezielle Kontaktierungsstellen auf (nicht dargestellt), über welche eine elektrische Kontaktierung der Leiterbahnen mit peripherer Elektronik oder einer Spannungsversorgung erfolgen kann.

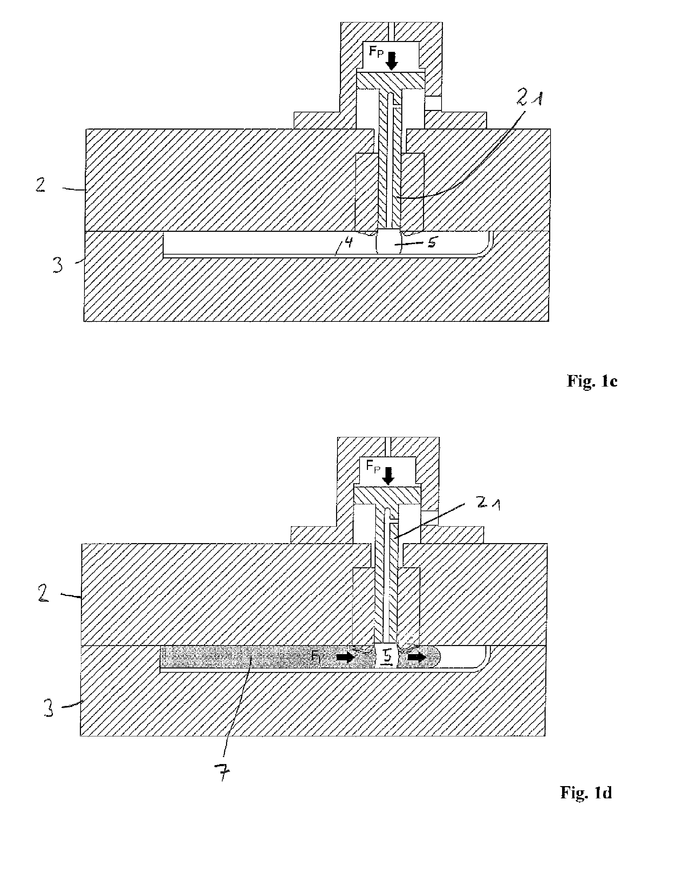

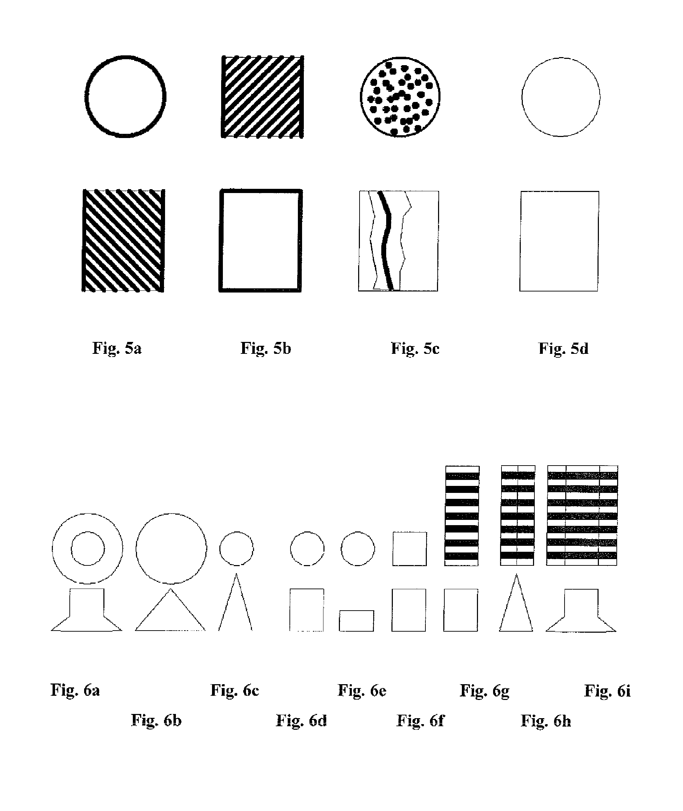

In der Formoberhälfte 2 ist ein vertikal hydraulisch oder pneumatisch verstellbarer Haltestempel 21 vorgesehen, welcher von einem Stempelring 22 umgeben ist. Der Stempelring 22 weist an seinem freien Ende einen gegenüber der Unterseite der oberen Formhälfte 2 überstehenden ringförmigen Vorsprung 22a auf, dessen Funktion im Zusammenhang mit Fig. 1d erläutert wird. Über einen mittels einer in den Haltstempel 21 integrierten Vakuumleitung 21a zugeführten Unterdruck wird ein zylindrisches Abdeckelement 5 gehalten, welches vorliegend aus einem elastischen Polymerwerkstoff gebildet ist und zudem leitfähig ausgebildet ist. Vorzugsweise handelt es sich bei dem elastischen Polymerwerkstoff um ein vernetztes Elastomer, speziell Polyurethan und Silikon, oder um eine teilvernetztes Elastomer, welches leitfähig gefüllt ist. Ebenfalls eingesetzt werden können leitfähige Thermoplaste, speziell Acrylnitril-Butadien-Styrol-Copolymerisat, Polycarbonat und Polycarbonat/Acrylnitril-Butadien-Styrol-Copolymerisat. Die Leitfähigkeit des Abdeckelements 5 kann auf verschiedene Weise erreicht werden, wie im Zusammenhang mit Fig. 5 noch erläutert wird.

Die Funktion des Abdeckelements 5 besteht nun darin, durch Auflage auf den Kontaktierungsstellen der Folie 4 während des folgenden Spritzgießprozesses diese abzudecken und entsprechend zu verhindern, dass die eingespritzte Kunststoffschmelze diese überdeckt und somit für eine spätere Kontaktierung unbrauchbar macht. Aufgrund der Leitfähigkeit des Abdeckelements 5 kann dieses in der erstarrenden Kunststoffschmelze 7 (vgl. Fig. 1d) verbleiben und somit eine dauerhafte Kontaktierung der Kontaktierungsstellen der Folie 4 sicherstellen. Das Abdeckelement 5 kann auf der folienzugewandten Kontaktseite mit einem elektrisch leitfähigen Klebstoff beschichtet sein, um die Kontaktsicherheit und Dauerbeständigkeit weiter zu erhöhen.

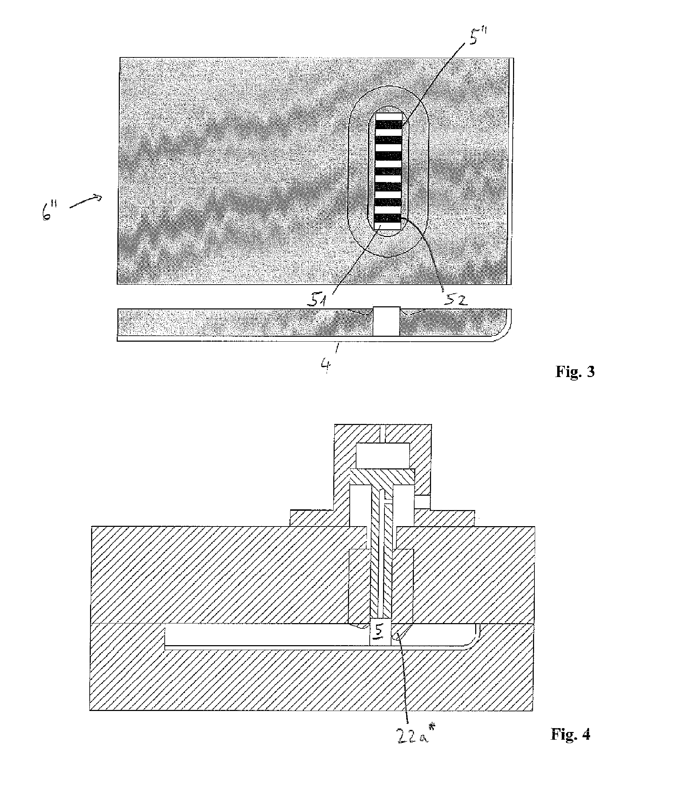

Der Klebstoff kann durch Druck oder Temperatur während des Spritzgießprozesse aktiviert werden und aushärten. Für Multikontaktlösungen (vgl. Fig. 3) können anisotrop leitfähige Klebstoffe verwendet werden

Dadurch, dass das Abdeckelement 5 ebenso wie die Kunststoffschmelze 7 aus einem polymeren Werkstoff bestehen, ist dieses an die Materialeigenschaften der Kunststoffschmelze 7, insbesondere deren Druck-, Temperatur-, Zeit- und Volumenverhalten, angepasst. Insbesondere entspricht sein Temperaturverhalten im Wesentlichen dem der Kunststoffschmelze 7, so dass diese in unmittelbarer Nachbarschaft zum Abdeckelement 5 kein anderes Schwindungsverhalten zeigt als in weiterer Entfernung. Ferner entspricht die Wärmeleitung vom Abdeckelement 5 in die thermisch empfindliche leitfähige Folie 5 im Wesentlichen der Wärmeleitung von der Kunststoffschmelze in die Folie 4. Somit kommt es praktisch zu keinen Verformungen der Folie 4 im Bereich der von dem Abdeckelement 5 bedeckten Kontaktierungsstellen, insbesondere zu keinen ästhetisch unvorteilhaften Aufwölbungen der Folie.

Fig. 1a zeigt, wie beschrieben, das noch geöffnete Spritzgießwerkzeug 1.

Fig. 1b zeigt das sodann geschlossene Werkzeug. Hier kommt das zylindrische Abdeckelement 5 auf den Kontaktierungsstellen der Folie 4 zur Anlage.

In Fig. 1c wird das elastische Abdeckelement 5 durch Absenkung des Haltestempels 21 mit einer Kraft F_{P} druckbeaufschlagt und somit axial gestaucht bzw. vorgespannt.

In Fig. 1d ist das Einströmen der Kunststoffschmelze 7 dargestellt. Vorliegend wird diese über einen am linken Längsende des Formbauteils 6 vorgesehenen (nicht dargestellten) Kanal unter hohem Druck mit Spitzenwerten des Einspritzdruckes von bis zu 1200 bar (im Falle der Verwendung von PC oder PC/ABS als Material für die Kunststoffschmelze 7) in die Kavität 31 des Spritzgießwerkzeugs 1 eingespritzt und fließt dementsprechend von links nach rechts, wobei sie, sobald sie auf das Abdeckelement 5 trifft, dieses mit einer in Fließrichtung der Kunststoffschmelze 7 gerichteten Kraft F_{I} beaufschlagt. Dabei kann das Abdeckelement 5, wie in Fig. 1d dargestellt, temporär entsprechend der Kraftrichtung verformt werden. Infolge der Druckbeaufschlagung durch den Haltestempel 21 und über den ringförmigen Vorsprung 22a des Stempelrings 22 wird das Abdeckelement 5 in seiner Position lateral gesichert, so dass es mit der einströmenden Kunststoffschmelze 7 nicht mitgerissen werden kann.

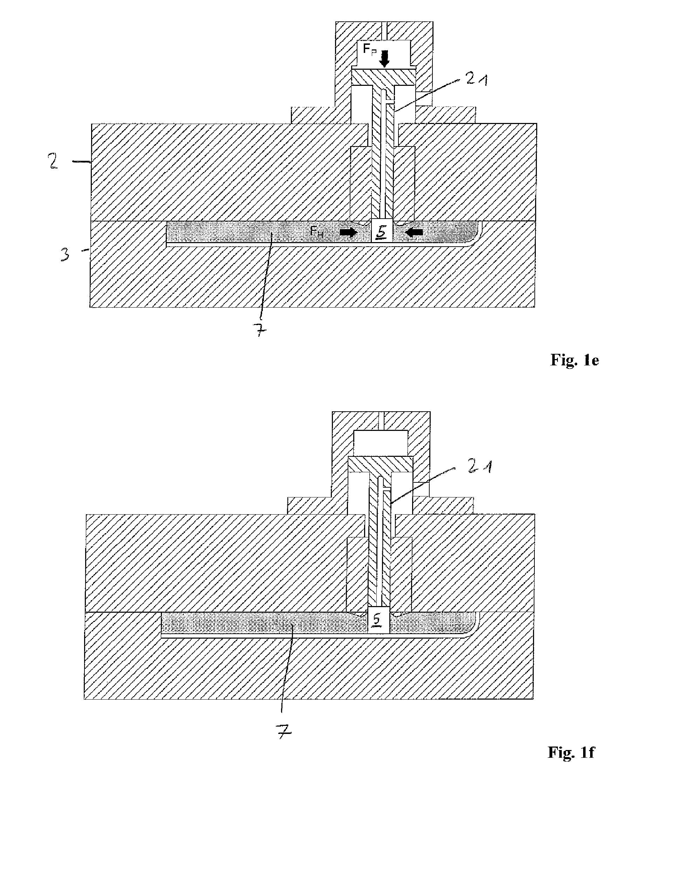

In Fig. 1e ist das Spritzgießwerkzeug 1 mit vollständig gefüllter Kavität 31 gezeigt. Das Füllen der Kavität (Fließen der Schmelze) ist abgeschlossen. Der Erstarrungsprozess der Kunststoffschmelze beginnt. Die Schmelze ist aber noch flüssig und steht unter dem hohen Nachdruck von z.B:800 bar bei Begin der Nachdruckphase, so dass entsprechende Kräfte radial auf das zylindrische Abdeckelement wirken (wie durch die beiden Pfeile in Fig. 1e dargestellt.

Im Zuge des Erstarrens der Kunststoffschmelze 7 nimmt ihr innerer Druck vom Anfangsdruck in der Nachdruckphase von z.B. 800 bar auf Normaldruck ab. Dabei kommt es zu unvermeidlicher Schwindung des Materials der Kunststoffschmelze 7. Dies wird durch eine entsprechende Ausdehnung des elastischen Abdeckelements 5 kompensiert. Um jedoch zu vermeiden, dass das über den Haltestempel 21 druckbeaufschlagte Abdeckelement 5 sich derart ausdehnt, dass es die erstarrende Kunststoffschmelze 7 seinerseits radial zurückdrängt, wird das Abdeckelement 5 möglichst synchron zur fortschreitenden Erstarrung der Kunststoffschmelze 7 durch ein Zurückbewegen des Haltestempels 21 druckentlastet, wie in Fig. 1f dargestellt. Untersuchungen der Anmelderin haben gezeigt, dass bei besonders genauer Anpassung der Materialeigenschaften des Abdeckelements 5 an die Materialeigenschaften der Kunststoffschmelze 7 eine Regelung der Bewegung bzw. Stellung des Haltestempels 21 zur prozesssynchronen Druckentlastung des Abdeckelements 5 nicht erforderlich ist.

Nach vollständiger Erstarrung der Kunststoffschmelze 7* kann das Spritzgießwerkzeug 1 geöffnet und das fertig produzierte Formbauteil 6 aus der Kavität 31 (bevorzugt automatisiert) entnommen werden (vgl. Fig. 1g). Erkennbar sind hier die bleibenden, aber strukturell unproblematischen Abdrücke 220a des Vorsprungs 22a des Stempelringes 22. In die erstarrte Kunststoffschmelze 7* ist das die Kontaktierungsstellen der Folie 4 kontaktierende leitfähige Abdeckelement 5 fest integriert und kann nun seinerseits mit einem Kabel o.dgl. kontaktiert werden, um eine leitende Verbindung zwischen beispielsweise der in die Folie 4 integrierten Antennenstruktur und weiteren elektronischen Baugruppen herzustellen.

Fig. 2 zeigt eine Aufsicht und Seitenansicht auf das fertig hergestellte Formbauteils 6' aus Fig. 1g. In der Aufsicht wird eine zweite identische Kontaktstelle sichtbar. Im Allgemeinen sind zwei oder mehr Kontaktstellen an einem Bauteil vorgesehen.

Fig. 3 zeigt ein weiteres fertig hergestelltes Formbauteil 6". Die Besonderheit hierbei besteht darin, das das Abdeckelement 5" eine Mehrfachkontaktierung der leitfähigen Folie 4 ermöglicht. So umfasst das Abdeckelement 5" der Fig. 3 eine Mehrzahl leitfähiger Lamellen 51, die jeweils sich mit dazwischen angeordneten isolierenden Bereichen 52 abwechseln. Es versteht sich, dass hierfür ein konstruktiv entsprechend angepasster Haltestempel verwendet werden muss.

Wie im Zusammenhang mit Fig. 1d bereits erläutert, wird das Abdeckelement 5 beim Einströmen der Kunststoffschmelze 7 mit einer starken, zunächst einseitig wirkenden seitlichen Kraft F_{I} beaufschlagt. Um einen Verbleib des Abdeckelements 5 in der Sollposition oberhalb der Kontaktierungsstellen auf der Folie 4 noch sicherer zu gewährleisten, kann der Stempelring 22 eine spezielle Form aufweisen. Wie in Fig. 4 dargestellt, kann der Stempelring 22 hierzu mit einem asymmetrischen Vorsprung 22a* ausgebildet sein, um das Abdeckelement besser gegen die einströmende Kunststoffschmelze abzustützen.

Fig. 5 zeigt verschiedene Ausführungsformen eines leitfähigen Abdeckelements für das Formbauteil. Das Abdeckelement gemäß Fig. 5a weist einen zylindrischen Kern aus einem Polymerwerkstoff mit einer leitfähigen Umhüllung nach Art einer metallischen Kabelabschirmung auf. Das Abdeckelement gemäß Fig. 5b weist einen quaderförmigen Kern aus einem Polymerwerkstoff auf, wobei die metallische Ummantelung - nach Art einer Kabelabschirmung - auch auf der Kontaktfläche zur Folie vollflächig vorhanden ist.

Das Abdeckelement gemäß Fig. 5c ist wiederum zylindrisch geformt und weist metallischer Fasern, beispielsweise aus Edelstahl, auf, wodurch eine gute Leitfähigkeit erreicht wird.

Das Abdeckelement gemäß Fig. 5d schließlich besteht aus einem polymeren Werkstoff mit einem hohen Anteil leitfähiger Füllstoffe (beispielsweise Silber-Partikel), so dass ebenfalls eine gute Leitfähigkeit ohne zusätzliche metallische Beschichtung erzielt wird.

Die Fig. 6a-i zeigen verschiedene geometrische Ausgestaltungen des Abdeckelements. Wie dargestellt, können zylinder-, quader-, oder kegelförmige Geometrien zum Einsatz kommen. Um den Abdeckelementen eine besonders hohe Standsicherheit zu verleihen, können sie zudem einen kegelförmig oder pyramidal verbreiterten Fuß aufweisen (vgl. Fig. 6a, 6i). Die Abdeckelemente gemäß den Fig. 6g - 6i sind für eine Mehrfachkontaktierung vorgesehen und nach Art des Abdeckelementes 5" der Fig. 3 ausgebildet.

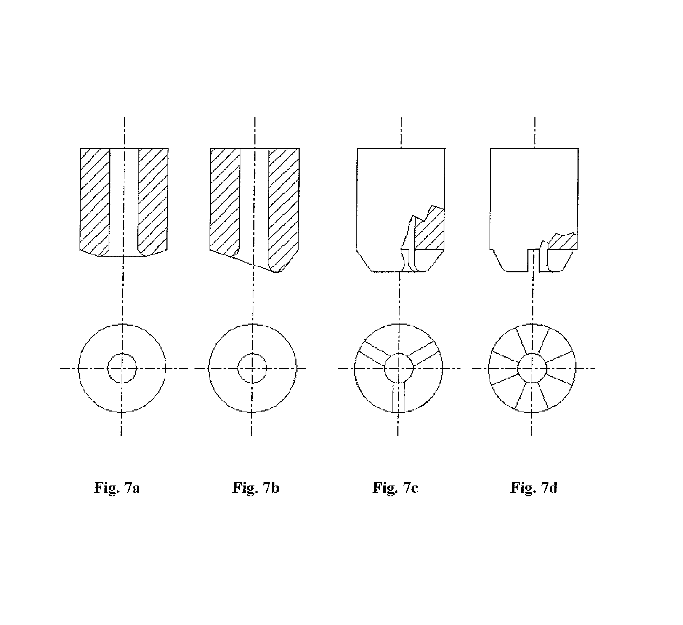

Fig. 7a-d zeigt verschiedene Ausgestaltungen des Stempelringes 22 des Haltestempels 21 gemäß Fig. 1. Die Ausführungsform der Fig. 7a ist im Wesentlichen zylindrisch und wurde bereits im Zusammenhang mit Fig. 1 ausführlich erläutert. Die Ausführungsform der Fig. 7b ist asymmetrisch gestaltet, wie in Fig. 4 gezeigt. Die Ausführungsformen der Fig. 7c und d wiederum sind mit ausgeprägten einzelnen Vorsprüngen ausgebildet, zwischen denen symmetrisch angeordnete Freistellungen vorgesehen sind. Durch diese Vorsprünge ist eine noch weiter verbesserte Stützung des Abdeckelements in der Kavität 31 des Spritzgießwerkzeugs 1 sichergestellt. Gleichzeitig wird durch die zurückgestuften Bereiche zwischen den Vorsprüngen ein ausreichender Fluss der Kunststoffschmelze 7 um das Abdeckelement 5 herum ermöglicht. Die durch die Vorsprünge verursachten und im Formbauteil entsprechend ausgeprägten Eindrücke erweisen sich als strukturell unproblematisch.

Es versteht sich, dass die vorstehend beschriebenen speziellen Formen des Haltestempelringes ebenfalls für Abdeckelemente, die für eine Mehrfachkontaktierung vorgesehen sind, einsetzbar sind.

## Patentansprüche

1. Verfahre zum Herstellen eines Formbauteils (6, 6', 6") umfassend eine mit einem Kunststoff hinterspritzte, elektrisch leitfähig beschichtete Folie (4),
- bei dem eine elektrisch leitfähig beschichtete Folie (4) in einem Spritzgießwerkzeug (1) positioniert wird,
- bei dem anschließend ein Abdeckelement (5, 5") auf dem zu kontaktierenden Bereich der Folie (4) positioniert wird und
- bei dem daran anschließend zur Hinterspritzung der Folie (4) eine Kunststoffschmelze (7) in das Spritzgießwerkzeug (1) eingespritzt wird, wobei das Abdeckelement (5, 5") umspritzt wird,
**dadurch gekennzeichnet. dass**
das Abdeckelement (5, 5") aus einem Polymerwerkstoff gebildet ist.

2. Verfahren nach Anspruch 1,
**dadurch gekennzeichnet. dass**
der polymere Werkstoff des Abdeckelements (5, 5") hinsichtlich seiner Wärmeleitfähigkeit und/oder seiner Wärmekapazität und/oder seines Kompressionsmoduls und/oder seines Elastizitätsmoduls an die in das Spritzgießwerkzeug (1) eingespritzte Kunststoffschmelze (7) angepasst ist.

3. Verfahren nach Anspruch 1 oder 2,
**dadurch gekennzeichnet. dass**
das Abdeckelement (5, 5 ") vorgeheizt wird.

4. Verfahren nach einem der Ansprüche 1 bis 3,
**dadurch gekennzeichnet. dass**
das Abdeckelement (5, 5") aus einem elastischen polymeren Werkstoff gebildet ist.

5. Verfahren nach Anspruch 4,
**dadurch gekennzeichnet. dass**
das auf dem zu kontaktierenden Bereich der Folie (4) positionierte Abdeckelement (5, 5") beim Einspritzen der Kunststoffschmelze (7) druckbeaufschlagt wird.

6. Verfahren nach Anspruch 5,
**dadurch gekennzeichnet. dass**
die Druckbeaufschlagung des Abdeckelements (5, 5 ") in der Erstarrungsphase reduziert wird.

7. Verfahren nach einem der Ansprüche 1 bis 6,
**dadurch gekennzeichnet. dass**
das Abdeckelement (5, 5") leitfähig ist und in der erstarrten Kunststoffschmelze (7) verbleibt.

8. Verfahren nach Anspruch 7,
**dadurch gekennzeichnet. dass**
das Abdeckelement (5, 5 ") aus einem polymeren Werkstoff der Gruppe Elastomere, insbesondere vernetzte Elastomere, speziell Polyurethan und Silikon, oder teilvernetzte Elastomere, und Thermoplaste, speziell Acrylnitril-Butadien-Styrol-Copolymerisat, Polycarbonat und Polycarbonat/Acrylnitril-Butadien-Styrol-Copolymerisat, gebildet ist.

9. Verfahren nach Anspruch 7 oder 8,
**dadurch gekennzeichnet. dass**
das Abdeckelement (5) aus einem polymeren Werkstoff, in den ein Metallschaum eingebettet ist, gebildet ist.

10. Verfahren nach Anspruch 7 oder 8,
**dadurch gekennzeichnet. dass**
das Abdeckelement (5 ") eine Mehrzahl gegeneinander isolierter leitfähiger Lamellen (51) zur Herstellung eines Mehrfachkontaktes aufweist.

11. Verfahren nach einem der Ansprüche 7 bis 10,
**dadurch gekennzeichnet. dass**
das Abdeckelement (5, 5 ") am freien Ende eines Haltestempels (21) angeordnet ist.

12. Verfahren nach Anspruch 11,
**dadurch gekennzeichnet. dass**
das Abdeckelement (5, 5") durch den Schaft des Haltestempels (21) zugeführt wird.

13. Verfahren nach Anspruch 11 oder 12
**dadurch gekennzeichnet, dass**
der Haltestempel (21) einen Stempelring (22) aufweist, wobei der Stempelring (22) auf der vom Schmelzfluss abgewandten Seite verlängert ausgebildet ist oder wobei der Stempelring (22) ein geschlitztes, das Abdeckelement (5, 5") aufnehmendes Ende aufweist, mit welchem er in das Spritzgießwerkzeug (1) hineinragt.

14. Verfahren nach einem der Ansprüche 1 bis 6,
**dadurch gekennzeichnet, dass**
das Abdeckelement als das freie Ende eines in die Kavität des Spritzgießwerkzeugs (1) hineinragenden Haltestempels ausgebildet ist, wobei zumindest das Abdeckelement aus einem Polymerwerkstoff gebildet ist und wobei das Abdeckelement mit dem Haltstempel nach Abschluss des Einspritzvorgangs, insbesondere nach erfolgter Erstarrung der eingespritzten Kunststoffschmelze, wieder aus der Kavität des Spritzgießwerkzeugs entfernt wird.

15. Formbauteil (6, 6', 6") umfassend eine mit einem Kunststoff hinterspritzte, elektrisch leitfähige Folie, hergestellt nach einem Verfahren gemäß den Ansprüchen 1 bis 14.
